(19) Europäisches Patentamt European Patent Office Office européen des brevets

(11) **EP 3 525 121 A1**

(12) **EUROPEAN PATENT APPLICATION**
published in accordance with Art. 153(4) EPC

(43) Date of publication:
**14.08.2019 Bulletin 2019/33**

(51) Int Cl.:
***G06F 19/00*** (2018.01)

(21) Application number: **18763193.2**

(22) Date of filing: **06.03.2018**

(86) International application number:
**PCT/CN2018/078164**

(87) International publication number:
**WO 2018/161900 (13.09.2018 Gazette 2018/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.03.2017 CN 201710136278**

(71) Applicant: **Alibaba Group Holding Limited Grand Cayman (KY)**

(72) Inventors:
• **ZHANG, Peng**
**Zhejiang 311121 (CN)**
• **WU, Xinqi**
**Zhejiang 311121 (CN)**
• **YANG, Zhixiong**
**Zhejiang 311121 (CN)**
• **ZHANG, Ying**
**Zhejiang 311121 (CN)**

(74) Representative: **Conroy, John**
**Fish & Richardson P.C.**
**Highlight Business Towers**
**Mies-van-der-Rohe-Straße 8**
**80807 München (DE)**

(54) **RISK CONTROL EVENT AUTOMATIC PROCESSING METHOD AND APPARATUS**

(57) Implementations of the present application disclose a risk control event automatic processing method and apparatus. The method includes: obtaining each piece of risk feature information of a current risk control event; determining a category of the current risk control event based on the risk feature information; obtaining evidence information corresponding to a determination result; and generating case closing information of the current risk control event based on the determination result and the evidence information. According to the implementations of the present application, the risk control event can be automatically processed, to further improve a case closing speed. In addition, the evidence information corresponding to the determination result of the risk control event can be automatically obtained, and therefore, it is convenient to verify the reliability of the determination result of the risk control event.

```
                                                    S101
┌─────────────────────────────────────────────────┐
│ Obtain each piece of risk feature information of  │
│ a current risk control event                      │
└─────────────────────────────────────────────────┘
                        │
                        ▼                           S102
┌─────────────────────────────────────────────────┐
│ Determine a category of the current risk control  │
│ event based on the risk feature information        │
└─────────────────────────────────────────────────┘
                        │
                        ▼                           S103
┌─────────────────────────────────────────────────┐
│ Obtain evidence information corresponding to a     │
│ determination result                               │
└─────────────────────────────────────────────────┘
                        │
                        ▼                           S104
┌─────────────────────────────────────────────────┐
│ Generate case closing information of the current   │
│ risk control event based on the determination      │
│ result and the evidence information                │
└─────────────────────────────────────────────────┘
```

FIG. 1

EP 3 525 121 A1

**Description**

**TECHNICAL FIELD**

The present application relates to the field of computer software technologies, and in particular, to a risk control event automatic processing method and apparatus.

**BACKGROUND**

On a risk control platform, many users report cases every day, and content reported each time can be considered as a risk control event. After receiving a risk control event, an examiner of the risk control platform examines the risk control event. The examiner usually determines the risk control event based on operation content, an environment, and a device of a user on the platform, for example, determines a category of the risk control event (for example, a case or a non-case, where different risk control events have different risks, a risk control event with a specified high risk level can be usually referred to as a case, and the other risk control events can be referred to as non-cases), etc. If necessary, the examiner communicates with the user for confirmation, and finally generates case closing information of the risk control event, to close the risk control event.

However, currently, the examiner determines a risk control event through manual analysis. Consequently, case closing efficiency is low, and in addition, the reliability of a determination result of the risk control event is hard to verify.

**SUMMARY**

Implementations of the present application provide a risk control event automatic processing method and apparatus, to alleviate the following technical problems in the existing technology: Because an examiner of a security risk control platform determines a risk control event through manual analysis the case closing efficiency is low, and the reliability of a determination result of the risk control event is also hard to verify.

To alleviate the previous technical problem, the implementations of the present application are implemented as follows:

An implementation of the present application provides a risk control event automatic processing method, including: obtaining each piece of risk feature information of a current risk control event; determining a category of the current risk control event based on the risk feature information; obtaining evidence information corresponding to a determination result; and generating case closing information of the current risk control event based on the determination result and the evidence information.

An implementation of the present application provides a risk control event automatic processing apparatus, including: a first acquisition module, configured to obtain each piece of risk feature information of a current risk control event; a determining module, configured to determine a category of the current risk control event based on the risk feature information; a second acquisition module, configured to obtain evidence information corresponding to a determination result; and a generation module, configured to generate case closing information of the current risk control event based on the determination result and the evidence information.

The previous at least one technical solution used in the present implementation of the present application can achieve the following beneficial effects: The risk control event can be automatically processed, to further improve a case closing speed. In addition, the evidence information corresponding to the determination result of the risk control event can be automatically obtained, and therefore, it is convenient to verify the reliability of the determination result of the risk control event, and some or all problems in the existing technology can be alleviated.

**BRIEF DESCRIPTION OF DRAWINGS**

To describe the technical solutions in the implementations of the present application or in the existing technology more clearly, the following briefly describes the accompanying drawings required for describing the implementations or the existing technology. Apparently, the accompanying drawings in the following description merely show some implementations of the present application, and a person of ordinary skill in the art can still derive other drawings from these accompanying drawings without creative efforts.

FIG. 1 is a schematic flowchart illustrating a risk control event automatic processing method, according to an implementation of the present application;
FIG. 2 is a schematic diagram illustrating an extended procedure corresponding to FIG. 1, according to an implementation of the present application;
FIG. 3 is a schematic diagram illustrating a decision tree, according to an implementation of the present application;

FIG. 4 is a schematic diagram illustrating decision paths on the decision tree in FIG. 3, according to an implementation of the present application;

FIG. 5 is a schematic diagram illustrating a comparison between case closing information generated based on the previous risk control event automatic processing method and case closing information in the existing technology, according to an implementation of the present application; and

FIG. 6 is a schematic structural diagram illustrating a risk control event automatic processing apparatus corresponding to FIG. 1, according to an implementation of the present application.

## DESCRIPTION OF IMPLEMENTATIONS

Implementations of the present application provide a risk control event automatic processing method and apparatus.

To make a person skilled in the art understand the technical solutions in the present application better, the following clearly and comprehensively describes the technical solutions in the implementations of the present application with reference to the accompanying drawings in the implementations of the present application. Apparently, the described implementations are merely some but not all of the implementations of the present application. All other implementations obtained by a person of ordinary skill in the art based on the implementations of the present application without creative efforts shall fall within the protection scope of the present application.

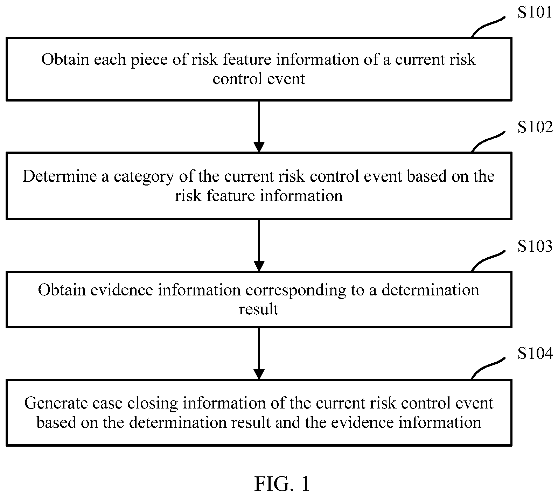

FIG. 1 is a schematic flowchart illustrating a risk control event automatic processing method, according to an implementation of the present application. From the perspective of a program, the present procedure can be executed by an application (APP), a personal computer (PC) side program, etc. From the perspective of a device, an execution body of the present procedure can include but is not limited to the following devices: a personal computer, a large-sized or medium-sized computer, a computer cluster, a mobile phone, a tablet computer, a smart wearable device, a vehicle machine, etc.

The procedure in FIG. 1 can include the following steps.

S101: Obtain each piece of risk feature information of a current risk control event.

In the present implementation of the present application, the risk control event can be obtained after a user reports a case, or can be obtained by actively monitoring a certain service.

An online shopping service is used as an example. When the user suspects that there is a problem with an online transaction of the user, the user can report a case to a corresponding risk control platform, and as such, the online transaction becomes a risk control event. Certainly, the risk control platform can alternatively actively monitor each online transaction of the user, and in this way, each online transaction becomes a risk control event.

In the present implementation of the present application, the risk feature information can be used to measure a risk of a risk control event. Therefore, the risk feature information can be used as a basis for determining the risk control event.

A risk feature corresponding to the risk feature information can be designed in advance based on a service. The online shopping service is still used as an example. The risk feature can be, for example, the number of historical transactions between users, a geographical location at which the user conducts a transaction, or a device used by the user to conduct a transaction, etc. In practice, the risk feature information can be a specific value of the risk feature corresponding to the risk feature information, or can be information used to determine the specific value, etc.

In practice, a risk feature can be designed based on a requirement, to improve effects of the solutions of the present application. Three possible requirements on the risk feature are listed as follows:

A "determinable" requirement means that the risk feature is suitable for determining of a case and is related to a risk category of the case. For example, the risk feature is "the number of historical transactions between users". When the value is very large, it indicates that the user is familiar with the other party of a transaction, a risk is low, and the transaction is unlikely to be a case; otherwise, a risk is high, and the transaction is more likely to be a case.

An "understandable" requirement means that a meaning of the risk feature is easy to understand. For example, "the number of historical transactions between users" has a clear meaning.

An "evidence-available" requirement means that the risk feature can correspond to clear evidence information, and the evidence information is easy to obtain. For example, the risk feature is "the number of historical transactions between users". Information about each corresponding historical transaction can be clearly and easily obtained, and used as corresponding evidence information.

S102: Determine a category of the current risk control event based on the risk feature information.

In the present implementation of the present application, different risk control events have different risks. Usually, a risk control event with a specified high risk level can be referred to as a case, and the other risk control events can be referred to as non-cases. Based on such a premise, the category of the risk control event can be a case or a non-case.

Further, the case or the non-case can be subdivided. For example, the case can be subdivided into "device lost-case" and "account stolen-case"; and the non-case can be subdivided into "performed by an acquaintance on behalf of the user-non-case" and "performed by the user-non-case".

It is worthwhile to note that classifying the risk control event based on whether the risk control event is a case is merely an example classification method. There is another classification method. For example, a plurality of different risk level categories can be set, and each risk control event is classified into at least one of the risk level categories.

S103: Obtain evidence information corresponding to a determination result.

In the present implementation of the present application, the evidence information can be obtained based on a determining process, or can be obtained based on the risk feature information. The evidence information can be, for example, detailed information of the determining process or detailed information of the risk feature information. Assume that certain risk feature information is as follows: There are five historical transactions between users. Therefore, detailed information of the risk feature information can be transaction record details of the five transactions, etc.

If necessary, the reliability of the determination result of the corresponding risk control event can be verified based on the evidence information.

S104: Generate case closing information of the current risk control event based on the determination result and the evidence information.

In the present implementation of the present application, in addition to generating the case closing information, a countermeasure can be taken for the current risk control event based on the determination result. For example, if it is determined that the current risk control event is a case, countermeasures such as banning a transaction account and refusing to continue a transaction can be taken for the current risk control event, to ensure the transaction security.

Based on the method in FIG. 1, the risk control event can be automatically processed, to improve a case closing speed. In addition, the evidence information corresponding to the determination result of the risk control event can be automatically obtained, and therefore, it is convenient to verify the reliability of the determination result of the risk control event.

Based on the method in FIG. 1, the present implementation of the present application further provides some implementation solutions of the method and an extended solution. Description is provided below.

In the present implementation of the present application, in step S102, the determining a category of the current risk control event based on the risk feature information can include: obtaining a classifier obtained by performing training based on risk feature information of sample risk control events; and determining the category of the current risk control event by classifying the current risk control event based on the classifier and the risk feature information.

The classifier can be implemented in a plurality of methods. For example, the classifier can be implemented based on a decision tree, or the classifier can be implemented based on a neural network. The classifier is usually obtained by performing pre-training based on a plurality of sample risk control events.

Certainly, the category of the current risk control event can be determined without using the classifier. For example, a risk feature information blacklist can be predetermined. Then, the risk feature information of the current risk control event is matched with the blacklist. If the risk feature information of the current risk control event matches the blacklist, it is directly determined that the current risk control event is a case.

In the present implementation of the present application, as described above, the evidence information corresponding to the determination result can be obtained based on the risk feature information. In such a case, different risk feature information usually corresponds to different evidence information. When there are a small number of risk features, evidence information corresponding to all risk feature information of the current risk control event can be obtained indiscriminately. However, when there are a large number of risk features, it is inappropriate because a large amount of processing resources and time are consumed and costs are increased.

In consideration of such a problem, only evidence information corresponding to some relatively important risk feature information can be obtained. For example, in the present implementation of the present application, a contribution representation value can be used to measure the importance of the risk feature information. In step S103, the obtaining evidence information corresponding to a determination result can include: determining contribution representation values of the risk feature information; and obtaining the evidence information corresponding to the determination result based on the contribution representation values and the risk feature information corresponding to the contribution representation values.

The previous example is still used. The relatively important risk feature information can be determined by ranking contribution representation values or by comparing contribution representation values with a specified threshold.

For example, the relatively important risk feature information is determined by ranking the contribution feature values. The obtaining evidence information corresponding to a determination result can include: ranking the risk feature information based on the determined contribution representation values of the risk feature information; and obtaining, based on a ranking result, evidence information corresponding to risk feature information with top N contribution representation values, and using the evidence information as the evidence information corresponding to the determination result, where N is an integer not less than 1.

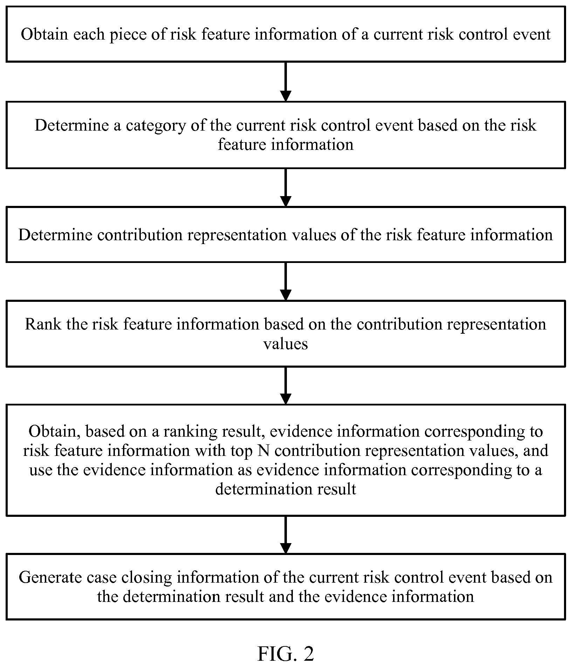

Based on the previous idea, the procedure in FIG. 1 can be extended to obtain a more detailed procedure, as shown in FIG. 2.

FIG. 2 is a schematic diagram illustrating an extended procedure corresponding to FIG. 1, according to an implementation of the present application.

The procedure in FIG. 2 can include the following steps: obtaining each piece of risk feature information of a current risk control event; determining a category of the current risk control event based on the risk feature information; determining contribution representation values of the risk feature information; ranking the risk feature information based on the contribution representation values; obtaining, based on a ranking result, evidence information corresponding to risk feature information with top N contribution representation values, and using the evidence information as evidence information corresponding to a determination result; and generating case closing information of the current risk control event based on the determination result and the evidence information.

Compared with the procedure in FIG. 1, the procedure in FIG. 2 focuses on determining of the contribution representation values of the risk feature information. Detailed description is provided below.

In the present implementation of the present application, the contribution representation values of the risk feature information can be determined based on one aspect or a plurality of aspects of factors. Several factors are listed as examples below.

First: Evidence importance. As described above, after the category of the current risk control event is determined, the evidence information needs to be further obtained. In other words, evidence needs to be further provided. The evidence importance can reflect the importance of the evidence information corresponding to the risk feature information.

Second: Category determination contribution. The category determination contribution can reflect the contribution of the risk feature information in a process of determining the category of the risk control event.

Third: Feature dimension contribution. The feature dimension contribution can reflect the contribution of a risk feature corresponding to the risk feature information to the result of determining the category of the risk control event, and the contribution can be independent of the determining process.

Fourth: Feature anomaly. The feature anomaly can reflect the anomaly of the risk feature information. For example, the feature anomaly can indicate the degree to which the risk feature information deviates from a standard value used in the determining process, etc. The standard value is used to be compared with the risk feature information, to determine how to select a branch in the determining process.

The previous factors can also be represented by corresponding representation values, to facilitate operations. The previous four factors are used as an example. The determining contribution representation values of the risk feature information can include: determining at least one of the following specific representation values of the risk feature information: an evidence importance representation value, a category determination contribution representation value, a feature dimension contribution representation value, and a feature anomaly representation value; and determining the contribution representation values of the risk feature information based on determined specific representation values.

In addition, for a risk control event with determined risk feature information, a contribution representation value of the risk feature information of the risk control event is a contribution representation value of a risk feature corresponding to the risk feature information, because a risk feature of the risk control event at this time is not a variable but is the risk feature information.

For ease of understanding, a solution that can be used to determine the previous representation values is described based on an actual application scenario.

In such a scenario, the previous classifier performs classification by using a decision tree. To be specific, in step S102, the category of the current risk control event is determined based on the decision tree. At least some nodes on the decision tree include a risk feature corresponding to the risk feature information.

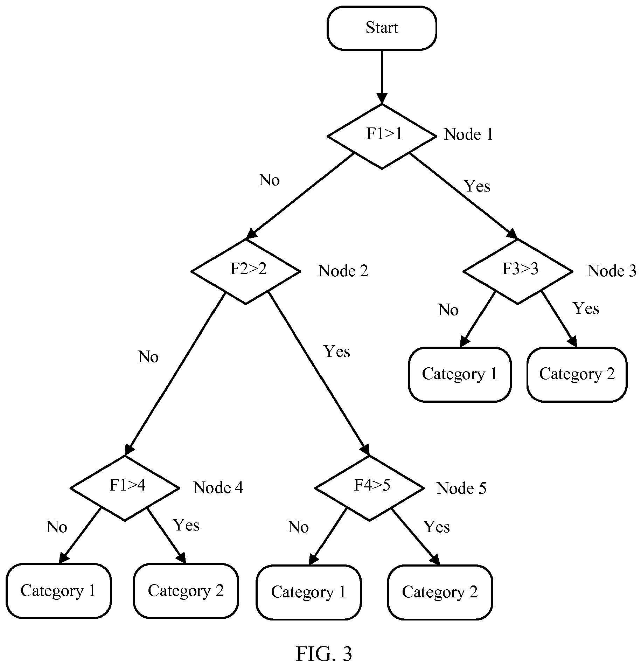

FIG. 3 is a schematic diagram illustrating the previous decision tree, according to an implementation of the present application. In FIG. 3, the decision tree includes five nodes. Each node includes one risk feature and a standard value corresponding to the risk feature. Leaf nodes on the decision tree are classified into two categories: category 1 and category 2. Information input into the decision tree is usually determined as category 1 or category 2. In step S102, the obtained risk feature information of the current risk control event can be input into the decision tree to determine the category of the current risk control event.

Node 1 is used as an example, and " $F_1 > 1$ " in node 1 means that a risk feature included in node 1 is denoted as $F_1$, and a corresponding standard value is 1; when input risk feature information of $F_1$ is not greater than 1, the left branch of node 1 is selected, in other words, a next node is node 2; and when input risk feature information of $F_1$ is greater than 1, the right branch of node 1 is selected, in other words, a next node is node 3.

For ease of description, the evidence importance representation value is denoted as $FC_k(f)$, the category determination contribution representation value is denoted as $FC_c(f)$, the feature dimension contribution representation value is denoted as $FC_F(f)$, and the feature anomaly representation value is denoted as $FO_c(f)$, where $f$ denotes a risk feature, and for a certain risk control event, $f$ can alternatively denote risk feature information corresponding to the risk feature. At least one determining method of each of the several representation values is described.

1. A determining method for the evidence importance representation value $FC_k(f)$. The evidence importance representation value $FC_k(f)$ can usually be determined based on prior field knowledge, and an expert in the field can provide the importance of each risk feature $f$ to subsequent evidence-providing. For example, $FC_k(f) \in [0,1]$ can be described. Greater importance of the risk feature $f$ to the subsequent evidence-providing can correspond to a larger value of $FC_k(f)$ in a value interval $[0,1]$.

2. A determining method for the category determination contribution representation value $FC_c(f)$. The category determination contribution representation value of the risk feature information of the current risk control event can be determined in the following method: determining a decision path corresponding to the determination result on the decision tree; and determining the category determination contribution representation value of the risk feature information of the current risk control event based on density change information of sample risk control events of a specified category that are before and after a specific node included on the decision path, where the specific node includes the risk feature corresponding to the risk feature information.

With reference to FIG. 3, assume that category 1 is case, and category 2 is non-case. The previous specified category can usually be a case, and the density change information of the sample risk control events of the specified category is case density change information.

A case density can be, for example, data such as a case proportion. The case proportion is used as an example. Assume that node 2 is on the decision path. Before node 2 performs filtering, a case proportion of the sample risk control events is 1/10; and after node 2 performs filtering, the case proportion of the sample risk control events is increased to 1/2. An increase from 1/10 to 1/2 can be used as the density change information.

After a node included on the decision path is passed, the degree to which the case density is increased can reflect the degree to which a risk feature included in the node contributes to classification determining. For any risk feature, the contribution of the risk feature to classification can be determined based on contributions of the risk feature to classification on at least some nodes including the risk feature among all nodes included on the decision path. There can be a plurality of determining methods. For example, the contributions of the risk feature to classification on at least some nodes including the risk feature can be accumulated or added through weighting.

For ease of understanding, description is provided by using formulas.

Assume that node $n$ on the decision tree includes the risk feature $f$ and node $n$ is included on the decision path and there are two categories that are respectively indicated by $y = 0$ and $y = 1$, the contribution of the risk feature $f$ to classification on node n is as follows:

$$FC_c^n(f) = P^n\big(y = C(x)\,|\,F, f\big) - P^n\big(y = C(x)\,|\,F\big) \quad \text{(Formula 1)}$$

$F$ denotes a risk feature set included in an upstream node of node $n$, $C(x)$ denotes a classification result of a current risk control event $x$, $P^n(y = C(x)|F)$ denotes a proportion of risk control events (for example, cases) of a specified category to all sample risk control events that enter node $n$ after the upstream node performs filtering, and $P^n(y=C(x)|F, f)$ denotes a proportion of risk control events (for example, cases) of the specified category to all sample risk control events obtained after node $n$ performs filtering.

Further, the contribution of the risk feature $f$ can be obtained by accumulating contributions corresponding to all nodes on the decision path:

For the risk feature $f$, the category determination contribution representation value $FC_c(f)$ can be as follows:

$$FC_c(f) = \sum_{n \in R(x),\, f = F_n} FC_c^n(f) \quad \text{(Formula 2)}$$

$R(x)$ denotes a decision path that $x$ passes through on the decision tree. A standard value of $f$ included in node $n$ on the decision tree is $F_n$.

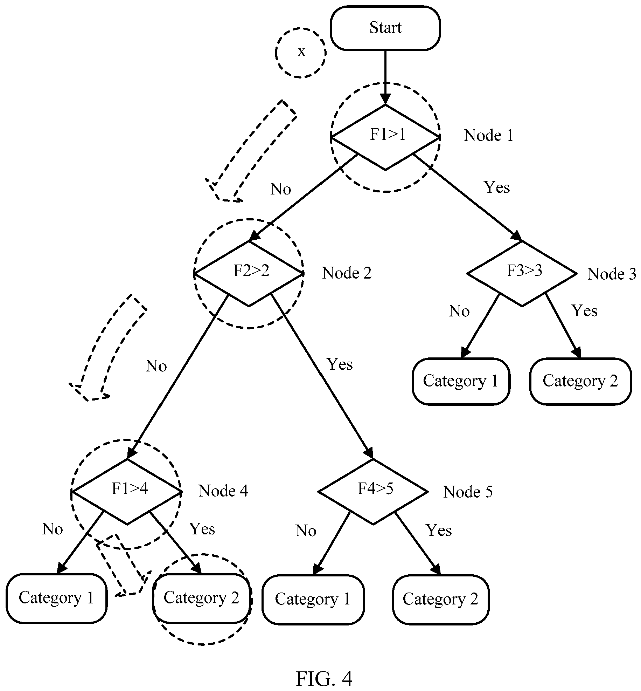

FIG. 4 is a schematic diagram illustrating decision paths on the decision tree in FIG. 3, according to an implementation of the present application.

In FIG. 4, a decision path that $x$ passes through is as follows: Each piece of risk feature information of $x$ is input into node 1, and passes node 2 and node 4 to a leaf node corresponding category 2. According to formula 2, a category determination contribution representation value of risk feature $F_1$ is $FC_1(F_1)+FC_4(F_1)$, that is, a category determination contribution representation value of risk feature information corresponding to risk feature $F_1$ in the risk feature information of *x*; a category determination contribution representation value of risk feature $F_2$ is $FC_2(F_2)$, that is, a category determination contribution representation value of risk feature information corresponding to risk feature $F_2$ in the risk feature information of *x*; and risk features $F_3$ and $F_4$ make no contribution to category determination of *x*.

Further, in practice, in step S102, the category of the current risk control event can be determined based on a plurality of decision trees, for example, a random forest. In such a case, category determination contributions can be determined on all the decision trees and are then added or averaged, and a value obtained through addition or averaging is used as the category determination contribution representation value.

Averaging is used as an example, formula 2 can be extended to obtain:

$$FC_c(f) = \frac{1}{|T|} \sum_{t \in T} FC_c^{(t)}(f)$$

(Formula 3)

*T* denotes a random forest used for category determination, *t* denotes a decision tree in *T*, and $FC_c^{(t)}(f)$ is a category determination contribution representation value corresponding to decision tree *t* that is calculated based on formula 2.

Still further, in practice, for the decision tree, the number of sample risk control events gradually decreases when approaching to a leaf node. Consequently, probability estimation can be inaccurate, and the reliability of the determined category determination contribution representation value is affected. For such a problem, the solutions in the present application also provide a countermeasure. For example, a virtual sample risk control event can be set, to maintain the number of samples at a proper level.

The determining the category determination contribution representation value of the risk feature information of the current risk control event based on density change information of sample risk control events of a specified category that are before and after a specific node included on the decision path can include: setting a virtual sample risk control event; and determining the category determination contribution representation value of the risk feature information of the current risk control event based on density change information of sample risk control events and virtual sample risk control events of the specified category that are before and after the specific node included on the decision path.

The virtual sample risk control event can be set in a plurality of methods, for example, can be set based on a prior probability distribution, or can be set at random. The previous method is used as an example. The setting a virtual sample risk control event can include: setting the virtual sample risk control event based on a prior probability distribution assumed for the sample risk control events of the specified category.

For example, assume that the sample risk control event of the specified category is a case, and assume that a case probability *p* follows a prior Beta distribution:

$$\frac{\Gamma(\alpha+\beta)}{\Gamma(\alpha)\Gamma(\beta)} p^{\alpha-1}(1-p)^{\beta-1}, 0 < p < 1.$$

An average value of *p* is $\dfrac{\alpha}{\alpha+\beta}$, and a variance of *p* is $\dfrac{\alpha\beta}{(\alpha+\beta)^2(\alpha+\beta+1)}$. Assume that *m* sample risk control events are observed and there are *z* cases. A posterior distribution of the case probability *p* is a Beta distribution, and parameters are as follows:

$$\alpha' = \alpha + z, \text{ and } \beta' = \beta + m - z.$$

An average value is

$$\frac{\alpha'}{\alpha'+\beta'} = \frac{\alpha+z}{\alpha+\beta+m}$$

(Formula 4).

Therefore, assuming the prior Beta distribution is equivalent to setting $\alpha + \beta$ virtual sample events, and there are $\alpha$ cases. To improve the reliability, in practice, a case proportion of the virtual sample events can be set to be the same as an actual case proportion $p_0$ of sample events. Assume that $m_0$ virtual sample events are set in total.

$$\alpha = m_0 \cdot p_0 \text{, and } \beta = m_0 \cdot \left(1 - p_0\right) \quad \text{(Formula 5)}$$

3. A determining method for the feature dimension contribution representation value $FC_F(f)$. The example in FIG. 3 is still used for description. As described above, $FC_c(f)$ usually measures the contribution of the risk feature $f$ by using an increase of the case density after the sample risk control event is filtered by a node including the risk feature $f$ on the decision path on the decision tree, which is essentially a measurement method based on a path on the decision tree. Further, the contribution of the risk feature $f$ can be alternatively measured without using the path on the decision tree, for example, measured by using $FC_F(f)$.

The feature dimension contribution representation value of the risk feature information of the current risk control event can be determined in the following method: determining a plurality of sets that correspond to a risk feature corresponding to the risk feature information; determining a set in the plurality of sets that includes the risk feature information; and determining the feature dimension contribution representation value of the risk feature information based on a density of sample risk control events, of a specified category, corresponding to the set that includes the risk feature information, where any risk feature information corresponding to the risk feature belongs to at least one of the plurality of sets.

In practice, the risk feature can be a numerical variable, or can be a non-numerical variable. Correspondingly, the risk feature information can be a numerical value, or can be a non-numerical value.

When the risk feature is a numerical variable, the plurality of sets can be a plurality of numerical intervals obtained by dividing a value range of the risk feature, and each set is one of the numerical intervals.

For example, when the risk feature $f$ is a numerical variable, a numerical interval obtained through division for the risk feature $f$ is denoted as $T_F(f)$. The degree to which a case density of the current risk control event $x$ in a numerical interval that includes the current risk control event $x$ can be used as the feature dimension contribution representation value of the risk feature $f$:

$$FC_F\left(f\right) = P\left(y = C\left(x\right) \mid f\left(x\right) \in T_F\left(f\right)\right) - P\left(y = C\left(x\right)\right) \quad \text{(Formula 6)}$$

$f(x)$ denotes the risk feature information, of $x$, corresponding to the risk feature $f$, and is a numerical value here. $P(y=C(x)\mid f \in T_F(f))$ denotes a case proportion of $x$ in the numerical interval that includes $x$. $P(y=C(x))$ denotes a case proportion in all intervals.

Numerical interval division can be implemented based on a quantization algorithm. There can be a plurality of quantization algorithms, for example, uniform interval division or a single-variable decision tree.

When the risk feature is a non-numerical variable, the plurality of sets can be a plurality of non-numerical variable value sets obtained by classifying non-numerical variable values corresponding to the risk feature, and each set is one of the non-numerical variable value sets. The non-numerical variable can be a category (category) variable, a string variable, etc.

For another example, when the risk feature $f$ is a category (category) variable, a conditional probability of a value of $f(x)$ can be used to calculate the feature dimension contribution representation value, and the conditional probability can be calculated based on the previous case density. Details are as follows:

$$FC_F\left(f\right) = P\left(y = C\left(x\right) \mid f = C\left(x\right)\right).$$

4. A determining method for the feature anomaly representation value $FO_c(f)$. It can be learned from the previous description that when the category determination contribution representation value $FC_c(f)$ is determined, $FO_c(f)$ in a node is the same provided that $FC_c(f)$ is in a same branch of a same node on the decision tree. However, it should be considered that, for example, when $f > 10$ in a node, contributions are obviously different when $f=10.1$ and $f=10000$. $FO_c(f)$ is a contribution measurement factor for such a case, and $FO_c(f)$ can be used to adjust $FC_c(f)$.

In the present implementation of the present application, the feature anomaly representation value of the risk feature information of the current risk control event can be determined in the following method: determining the feature anomaly representation value of the risk feature information of the current risk control event based on a status of determining sample risk control events of a specified category on a specific node included on the decision path, where the specific node includes the risk feature corresponding to the risk feature information.

Further, there are a plurality of implementation solutions of the method in the previous paragraph. For example, the feature anomaly representation value can be determined based on a posterior probability.

$$FO_C(f) = max\left[P\big(y = C(x) \mid f \geq f(x) \cap f \in N(f)\big), P\big(y = C(x) \mid f < f(x) \cap f \in N(f)\big)\right]$$

(Formula 7)

$N(f)$ denotes space determined by the risk feature $f$ on the decision path. The decision path in FIG. 3 is used as an example, and $N(F_1) = (F_1 > 1) \cap (F_1 > 4) = F_1 > 4$. In addition, an advantage of formula 7 is that $FO_C(f)$ and $FC_C(f)$ are on the same order of magnitude when $FO_C(f) \in [0,1]$.

In practice, the feature anomaly representation value can be used to adjust both $FC_C(f)$ and $FC_F(f)$. For distinguishing, a feature anomaly representation value used to adjust $FC_F(f)$ is denoted as $FO_F(f)$.

$FO_F(f)$ can be calculated in a similar method:

$$FO_F(f) = max\left[P\big(y = C(x) \mid f \geq f(x) \cap f \in T_F(f)\big), P\big(y = C(x) \mid f < f(x) \cap f \in T_F(f)\big)\right]$$

(Formula 8)

The previous separately describes in detail several factors that can be used to determine a contribution representation value of the risk feature information. The contribution representation value of the risk feature information can be determined in a plurality of methods based on a determined representation value of each factor. Two methods are listed: heuristic-based design and machine learning based on an annotated sample. The two methods are separately described.

The heuristic-based design means that the contribution representation value of the risk feature information can be obtained by comprehensively calculating the representation values of the previous factors by designing a proper formula. For example,

$$FC(f) = FC_k(f) \cdot \left[\lambda \cdot FO_F(f) \cdot FC_F(f) + (1 - \lambda) \cdot FO_C(f) \cdot FC_C(f)\right]$$

(Formula 9).

$\lambda$ is an adjustable weight coefficient.

The machine learning based on an annotated sample mainly includes two main steps:

1. Obtain annotated samples. Some cases and non-cases can be sampled, and experts can rate correlation between risk features of these samples or correlation between these samples. As such, an annotated data set is obtained. The annotated data set includes a risk feature $f_{i,j}$ of a sample $x_i$, and a correlation label $y_{i,j}$.

A learning method: When there is an annotated data set $\{(x_i, f_{i,j}, y_{i,j}), 1 \leq i \leq N, 1 \leq j \leq K\}$, based on the representation values of the previous factors, the sample $x_i$ and the risk feature $f_{i,j}$ of the sample $x_i$ can form a description vector:

$[FC_K(f_{i,j}), FO_F(f_{i,j}), FC_F(f_{i,j}), FO_C(f_{i,j}), FC_C(f_{i,j})]$. This is a typical learning to rank (learning to rank) problem. A proper ranking model, for example, rank-SVM can be used to fit the correlation label $y_{i,j}$, to obtain a contribution representation value of corresponding risk feature information.

Further, in step S103, the obtaining evidence information corresponding to a determination result can include: ranking the risk feature information based on the determined contribution representation values of the risk feature information; and obtaining, based on a ranking result, evidence information corresponding to risk feature information with top N contribution representation values, and using the evidence information as the evidence information corresponding to the determination result. Alternatively, the risk feature information may not be ranked. Instead, a threshold of the contribution representation value can be predetermined, and evidence information corresponding to risk feature information that has a contribution representation value not less than the threshold is obtained and used as the evidence information corresponding to the determination result.

In practice, after the evidence information is obtained, the evidence information can be processed based on a specific format template, so that the evidence information is used as a part of the finally generated case closing information. The format template is not limited in the present application, and can be a text format template, or can be a table data format template, a graph data format template, etc.

In the present implementation of the present application, when the category of the current risk control event is determined based on the decision tree, a confidence level of the determination result can be further calculated by using a corresponding solution.

If the confidence level of the determination result is low, the reliability of subsequent steps performed based on the determination result is also hard to ensure. Therefore, a related parameter can be adjusted and the category of the current risk control event is re-determined, until the confidence level of the determination result reaches a relatively high degree. Alternatively, the category of the current risk control event is determined manually instead. A specific degree that the confidence level needs to reach can be predefined by using a specified threshold.

Based on the analysis in the previous paragraph, in step S104, before the case closing information of the current risk control event is generated, the following step can be further performed: calculating a confidence level of the determination result; and determining that the confidence level of the determination result is not less than a specified threshold.

There are several solutions for calculating the confidence level. For example, for a leaf node on which the current risk control event falls on the decision path, a posterior probability of correctly classifying sample risk control events that fall on the leaf node is determined as the confidence level. For another example, for a random forest, a proportion of the maximum number of results obtained by determining the current risk control event on decision trees in the random forest is calculated as the confidence level.

In the present implementation of the present application, in step S104, the case closing information can include the determination result and the evidence information, and can further include other related information such as the confidence level. Usually, information such as the determination result and the evidence information can be assembled based on a predetermined case closing information template, to generate the case closing information. The case closing information template can be described based on a specific application scenario. Implementations are not limited in the present application.

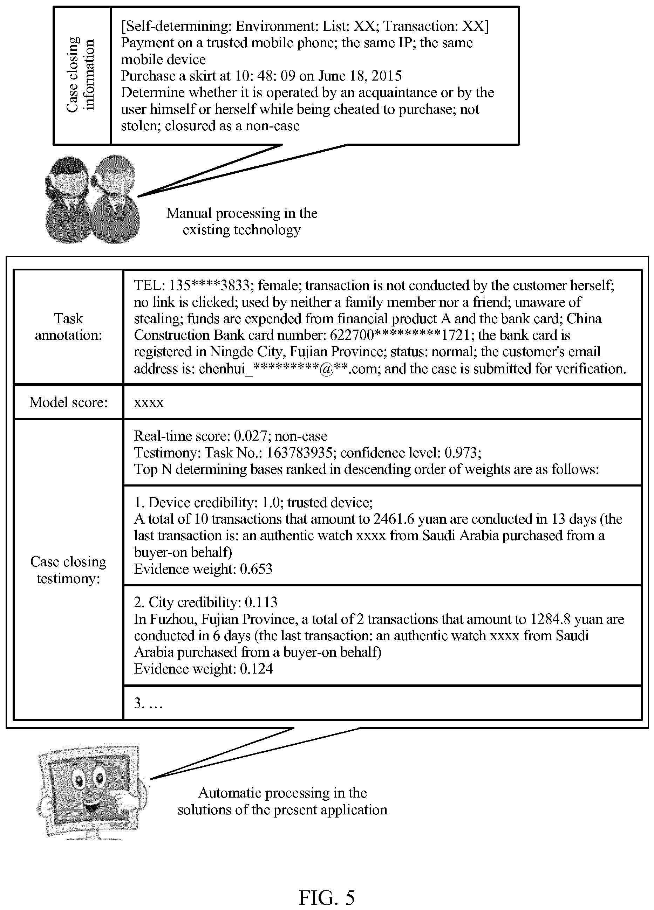

More intuitively, the present implementation of the present application further provides a schematic diagram illustrating a comparison between case closing information generated based on the previous risk control event automatic processing method and case closing information in the existing technology. As shown in FIG. 5.

FIG. 5 includes two sub-diagrams: "manual processing in the existing technology" and "automatic processing in the solutions of the present application".

It can be seen from the upper side of FIG. 5 that in the existing technology, because manual processing is performed, case closing information is simple, a current risk control event "a user purchases a skirt at 10:48:09 on June 18, 2015" is simply described, and a determination result "non-case" is provided. The case closing information includes little information.

It can be seen from the lower side of FIG. 5 that based on the solutions in the present application, detailed case closing information is generated, and the case closing information includes three parts: task annotation, model score, and case closing testimony.

The "task annotation" describes detailed information of the current risk control event, for example, a mobile phone number of a user, a gender of the user, an email address of the user, some scenario information (for example, used by neither a family member nor a friend) obtained by directly communicating with the user, a related financial product and bank card number, a location at which the bank card is registered, and a status of the bank card.

The "model score" describes scores of some models used to implement the solutions of the present application, and the score can measure a function or performance of a model to some extent. The model can be, for example, a model used for the classifier, a model used to determine the contribution representation value, and a model used to obtain the evidence information.

The "case closing testimony" describes the determination result of the current risk control event and the confidence level of the determination result, some risk feature information used for determining, a contribution representation value of the risk feature information, corresponding evidence information, etc.

When the current risk control event is determined as a non-case, and the confidence level is 0.973. The risk feature information used for determining includes "device credibility", "city credibility", etc. The "device credibility" is used as an example, a contribution representation value of the "device credibility" can be an evidence weight 0.653, and corresponding evidence information is "a total of 10 transactions that amount to 2461.6 yuan are conducted in 13 days (the last transaction is: an authentic watch xxxx from Saudi Arabia purchased from a buyer-on behalf)". The evidence information indicates that the user has conducted a large number of transactions by using the current device. It can be inferred that the current device is a device frequently used by the user, and therefore, there is a high probability that the current device is a trusted device.

Based on the comparison between the existing technology and the solution in the present application in FIG. 5, it can be seen that by using the solution in the present application, labor can be saved, and a speed of processing the risk control event is accelerated; a variety of risk feature information is considered more comprehensively, to determine the risk control event; and in addition, the evidence information used to support the determination result can be conveniently provided, and therefore, it is convenient to verify the reliability of the determination result of the risk control event.

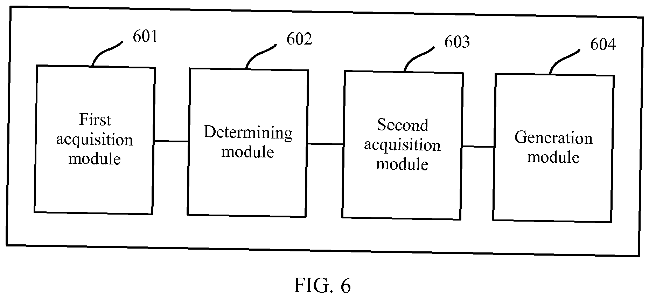

The risk control event automatic processing method provided in the present implementation of the present application is described above. As shown in FIG. 6, based on the same invention idea, an implementation of the present application further provides a corresponding apparatus.

FIG. 6 is a schematic structural diagram illustrating a risk control event automatic processing apparatus corresponding to FIG. 1, according to an implementation of the present application. The apparatus can be located on an execution body of the procedure in FIG. 1, and includes: a first acquisition module 601, configured to obtain each piece of risk feature information of a current risk control event; a determining module 602, configured to determine a category of the current risk control event based on the risk feature information; a second acquisition module 603, configured to obtain evidence information corresponding to a determination result; and a generation module 604, configured to generate case closing information of the current risk control event based on the determination result and the evidence information.

Optionally, the determining module 602 determines the category of the current risk control event based on the risk feature information, including: obtaining, by the determining module 602, a classifier obtained by performing training based on risk feature information of sample risk control events; and determining the category of the current risk control event by classifying the current risk control event based on the classifier and the risk feature information.

Optionally, the second acquisition module 603 obtains the evidence information corresponding to the determination result, including: determining, by the second acquisition module 603, contribution representation values of the risk feature information; and obtaining the evidence information corresponding to the determination result based on the contribution representation values and the risk feature information corresponding to the contribution representation values.

Optionally, the determining, by the second acquisition module 603, contribution representation values of the risk feature information includes: determining, by the second acquisition module 603, at least one of the following specific representation values of the risk feature information: an evidence importance representation value, a category determination contribution representation value, a feature dimension contribution representation value, and a feature anomaly representation value; and determining the contribution representation values of the risk feature information based on determined specific representation values.

Optionally, the classifier performs classification by using a decision tree, and at least some nodes on the decision tree include risk features corresponding to the risk feature information.

Optionally, the second acquisition module 603 determines the category determination contribution representation value of the risk feature information of the current risk control event in the following method: determining, by the second acquisition module 603, a decision path corresponding to the determination result on the decision tree; and determining the category determination contribution representation value of the risk feature information of the current risk control event based on density change information of sample risk control events of a specified category that are before and after a specific node included on the decision path, where the specific node includes the risk feature corresponding to the risk feature information.

Optionally, the determining, by the second acquisition module 603, the category determination contribution representation value of the risk feature information of the current risk control event based on density change information of sample risk control events of a specified category that are before and after a specific node included on the decision path includes: setting, by the second acquisition module 603, a virtual sample risk control event; and determining the category determination contribution representation value of the risk feature information of the current risk control event based on density change information of sample risk control events and virtual sample risk control events of the specified category that are before and after the specific node included on the decision path.

Optionally, the setting, by the second acquisition module 603, a virtual sample risk control event includes: setting, by the second acquisition module 603, the virtual sample risk control event based on a prior probability distribution assumed for the sample risk control events of the specified category.

Optionally, the second acquisition module 603 determines the feature dimension contribution representation value of the risk feature information of the current risk control event in the following method: determining, by the second acquisition module 603, a plurality of sets that correspond to a risk feature corresponding to the risk feature information; determining a set in the plurality of sets that includes the risk feature information; and determining the feature dimension contribution representation value of the risk feature information based on a density of sample risk control events, of a specified category, corresponding to the set that includes the risk feature information, where any risk feature information corresponding to the risk feature belongs to at least one of the plurality of sets.

Optionally, the second acquisition module 603 determines the feature anomaly representation value of the risk feature information of the current risk control event in the following method: determining, by the second acquisition module 603, the feature anomaly representation value of the risk feature information of the current risk control event based on a status of determining sample risk control events of a specified category on a specific node included on the decision path, where the specific node includes the risk feature corresponding to the risk feature information.

Optionally, the second acquisition module 603 obtains the evidence information corresponding to the determination result, including: ranking, by the second acquisition module 603, the risk feature information based on the determined contribution representation values of the risk feature information; and obtaining, based on a ranking result, evidence information corresponding to risk feature information with top N contribution representation values, and using the evidence information as the evidence information corresponding to the determination result.

Optionally, before generating the case closing information of the current risk control event, the generation module 604 calculates a confidence level of the determination result, and determines that the confidence level of the determination result is not less than a specified threshold.

Optionally, the category of the current risk control event is a case or a non-case.

The apparatus provided in the present implementation of the present application is in a one-to-one correspondence with the method provided in the present implementation of the present application. Therefore, the apparatus and the method corresponding to the apparatus have similar beneficial technical effects. A beneficial technical effect of the method has been described above in detail, and therefore a beneficial technical effect of the corresponding apparatus is omitted here for simplicity.

In the 1990s, whether a technical improvement is a hardware improvement (for example, an improvement to a circuit structure such as a diode, a transistor, or a switch) or a software improvement (an improvement to a method procedure) can be clearly distinguished. However, as technologies develop, current improvements to many method procedures can be considered as direct improvements to hardware circuit structures. A designer usually programs an improved method procedure into a hardware circuit, to obtain a corresponding hardware circuit structure. Therefore, a method procedure can be improved by using a hardware entity module. For example, a programmable logic device (PLD) (for example, a field programmable gate array (FPGA)) is such an integrated circuit, and a logical function of the PLD is determined by a user through component programming. The designer performs programming to "integrate" a digital system to a PLD without requesting a chip manufacturer to design and produce an application-specific integrated circuit chip. In addition, at present, instead of manually manufacturing an integrated chip, this category of programming is mostly implemented by using "logic compiler (logic compiler)" software. The programming is similar to a software compiler used to develop and write a program. Original code needs to be written in a particular programming language for compilation. The language is referred to as a hardware description language (HDL). There are many HDLs, such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). The very-high-speed integrated circuit hardware description language (VHDL) and Verilog are most commonly used. A person skilled in the art should also understand that a hardware circuit that implements a logical method procedure can be readily obtained once the method procedure is logically programmed by using the several described hardware description languages and is programmed into an integrated circuit.

A controller can be implemented by using any appropriate method. For example, the controller can be a microprocessor or a processor, or a computer-readable medium that stores computer readable program code (such as software or firmware) that can be executed by the microprocessor or the processor, a logic gate, a switch, an application-specific integrated circuit (ASIC), a programmable logic controller, or a built-in microprocessor. Examples of the controller include but are not limited to the following microprocessors: ARC 625D, Atmel AT91SAM, Microchip PIC18F26K20, and Silicone Labs C8051F320. A memory controller can also be implemented as a part of the control logic of the memory. A person skilled in the art also knows that, in addition to implementing the controller by using the computer readable program code only, method steps can be logically programmed to allow the controller to implement the same function in forms of the logic gate, the switch, the application-specific integrated circuit, the programmable logic controller, and the built-in microcontroller. Therefore, the controller can be considered as a hardware component, and apparatuses configured to implement various functions in the controller can also be considered as a structure inside the hardware component. Or the apparatuses configured to implement various functions can even be considered as both software modules implementing the method and a structure inside the hardware component.

The system, apparatus, module, or unit illustrated in the previous implementations can be implemented by using a computer chip or an entity, or can be implemented by using a product having a certain function. A typical implementation device is a computer. The computer can be, for example, a personal computer, a laptop computer, a cellular phone, a camera phone, a smartphone, a personal digital assistant, a media player, a navigation device, an email device, a game console, a tablet computer, or a wearable device, or a combination of any of these devices.

For ease of description, the apparatus above is described by dividing functions into various units. Certainly, when the present application is implemented, functions of the units can be implemented in one or more pieces of software and/or hardware.

A person skilled in the art should understand that an implementation of the present disclosure can be provided as a method, a system, or a computer program product. Therefore, the present disclosure can use a form of hardware only implementations, software only implementations, or implementations with a combination of software and hardware.

Moreover, the present disclosure can use a form of a computer program product that is implemented on one or more computer-usable storage media (including but not limited to a disk memory, a CD-ROM, an optical memory, etc.) that include computer-usable program code.

The present disclosure is described with reference to the flowcharts and/or block diagrams of the method, the device (system), and the computer program product based on the implementations of the present disclosure. It should be understood that computer program instructions can be used to implement each process and/or each block in the flowcharts and/or the block diagrams and a combination of a process and/or a block in the flowcharts and/or the block diagrams. These computer program instructions can be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions can be stored in a computer readable memory that can instruct the computer or the another programmable data processing device to work in a specific way, so that the instructions stored in the computer readable memory generate an artifact that includes an instruction apparatus. The instruction apparatus implements a specific function in one or more procedures in the flowcharts and/or in one or more blocks in the block diagrams.

These computer program instructions can be loaded onto the computer or another programmable data processing device, so that a series of operation steps are performed on the computer or the another programmable device, thereby generating computer-implemented processing. Therefore, the instructions executed on the computer or the another programmable device provide steps for implementing a specific function in one or more procedures in the flowcharts and/or in one or more blocks in the block diagrams.

In a typical configuration, a computing device includes one or more processors (CPU), one or more input/output interfaces, one or more network interfaces, and one or more memories.

The memory can include a non-persistent memory, a random access memory (RAM), a nonvolatile memory, and/or another form in the computer readable medium, for example, a read-only memory (ROM) or a flash memory (flash RAM). The memory is an example of the computer readable medium.

The computer readable medium includes persistent, non-persistent, movable, and unmovable media that can store information by using any method or technology. The information can be a computer readable instruction, a data structure, a program module, or other data. Examples of a computer storage medium include but are not limited to a parameter random access memory (PRAM), a static random access memory (SRAM), a dynamic random access memory (DRAM), another category of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a cassette magnetic tape, a magnetic tape/magnetic disk storage, another magnetic storage device, or any other non-transmission medium. The computer storage medium can be used to store information accessible to the computing device. Based on the definition in the present specification, the computer readable medium does not include transitory computer readable media (transitory media) such as a modulated data signal and carrier.

It is worthwhile to further note that, the terms "include", "comprise", or their any other variants are intended to cover a non-exclusive inclusion, so a process, a method, a commodity, or a device that includes a list of elements not only includes those elements but also includes other elements which are not expressly listed, or further includes elements inherent to such a process, method, commodity, or device. Without more constraints, an element preceded by "includes a ..." does not preclude the existence of additional identical elements in the process, method, commodity, or device that includes the element.

The present application can be described in the general context of computer executable instructions executed by a computer, for example, a program module. Usually, the program module includes a routine, a program, an object, a component, a data structure, etc. executing a task or implementing an abstract data category. The present application can also be practiced in distributed computing environments. In the distributed computing environments, tasks are performed by remote processing devices connected through a communications network. In a distributed computing environment, the program module can be located in both local and remote computer storage media including storage devices.

The implementations in the present specification are described in a progressive way. For same or similar parts of the implementations, references can be made to the implementations. Each implementation focuses on a difference from other implementations. Particularly, a system implementation is basically similar to a method implementation, and therefore, is described briefly. For related parts, references can be made to related descriptions in the method implementation.

The previous implementations are implementations of the present application, and are not intended to limit the present application. A person skilled in the art can make various modifications and changes to the present application.

**EP 3 525 121 A1**

Any modification, equivalent replacement, or improvement made without departing from the spirit and principle of the present application shall fall within the scope of the claims in the present application.

**Claims**

1. A risk control event automatic processing method, comprising:

> obtaining each piece of risk feature information of a current risk control event;
> determining a category of the current risk control event based on the risk feature information;
> obtaining evidence information corresponding to a determination result; and
> generating case closing information of the current risk control event based on the determination result and the evidence information.

2. The method according to claim 1, wherein the determining a category of the current risk control event based on the risk feature information comprises:

> obtaining a classifier obtained by performing training based on risk feature information of sample risk control events; and
> determining the category of the current risk control event by classifying the current risk control event based on the classifier and the risk feature information.

3. The method according to claim 2, wherein the obtaining evidence information corresponding to a determination result comprises:

> determining contribution representation values of the risk feature information; and
> obtaining the evidence information corresponding to the determination result based on the contribution representation values and the risk feature information corresponding to the contribution representation values.

4. The method according to claim 3, wherein the determining contribution representation values of the risk feature information comprises:

> determining at least one of the following specific representation values of the risk feature information: an evidence importance representation value, a category determination contribution representation value, a feature dimension contribution representation value, or a feature anomaly representation value; and
> determining the contribution representation values of the risk feature information based on determined specific representation values.

5. The method according to claim 4, wherein the classifier performs classification by using a decision tree, and wherein at least some nodes on the decision tree comprise a risk feature corresponding to the risk feature information.

6. The method according to claim 5, wherein the category determination contribution representation value of the risk feature information of the current risk control event is determined in the following method:

> determining a decision path corresponding to the determination result on the decision tree; and
> determining the category determination contribution representation value of the risk feature information of the current risk control event based on density change information of sample risk control events of a specified category that are before and after a specific node comprised on the decision path, wherein the specific node comprises the risk feature corresponding to the risk feature information.

7. The method according to claim 6, wherein the determining the category determination contribution representation value of the risk feature information of the current risk control event based on density change information of sample risk control events of a specified category that are before and after a specific node comprised on the decision path comprises:

> setting a virtual sample risk control event; and
> determining the category determination contribution representation value of the risk feature information of the current risk control event based on density change information of sample risk control events and virtual sample

14

risk control events of the specified category that are before and after the specific node comprised on the decision path.

8. The method according to claim 7, wherein the setting a virtual sample risk control event comprises:
setting the virtual sample risk control event based on a prior probability distribution assumed for the sample risk control events of the specified category.

9. The method according to claim 4, wherein the feature dimension contribution representation value of the risk feature information of the current risk control event is determined in the following method:

determining a plurality of sets that correspond to a risk feature corresponding to the risk feature information;
determining a set in the plurality of sets that comprises the risk feature information; and
determining the feature dimension contribution representation value of the risk feature information based on a density of sample risk control events, of a specified category, corresponding to the set that comprises the risk feature information, wherein
any risk feature information corresponding to the risk feature belongs to at least one of the plurality of sets.

10. The method according to claim 5, wherein the feature anomaly representation value of the risk feature information of the current risk control event is determined in the following method:
determining the feature anomaly representation value of the risk feature information of the current risk control event based on a status of determining sample risk control events of a specified category on a specific node comprised on the decision path, wherein the specific node comprises the risk feature corresponding to the risk feature information.

11. The method according to claim 3, wherein the obtaining evidence information corresponding to a determination result comprises:

ranking the risk feature information based on the determined contribution representation values of the risk feature information; and
obtaining, based on a ranking result, evidence information corresponding to risk feature information with top N contribution representation values, and using the evidence information as the evidence information corresponding to the determination result.

12. The method according to claim 1, wherein before the generating case closing information of the current risk control event, the method further comprises:

calculating a confidence level of the determination result; and
determining that the confidence level of the determination result is not less than a specified threshold.

13. The method according to any one of claims 1 to 12, wherein the category of the current risk control event is a case or a non-case.

14. A risk control event automatic processing apparatus, comprising:

a first acquisition module, configured to obtain each piece of risk feature information of a current risk control event;
a determining module, configured to determine a category of the current risk control event based on the risk feature information;
a second acquisition module, configured to obtain evidence information corresponding to a determination result; and
a generation module, configured to generate case closing information of the current risk control event based on the determination result and the evidence information.

15. The apparatus according to claim 14, wherein the determining module determines the category of the current risk control event based on the risk feature information, comprising:

obtaining, by the determining module, a classifier obtained by performing training based on risk feature information of sample risk control events; and
determining the category of the current risk control event by classifying the current risk control event based on the classifier and the risk feature information.

**16.** The apparatus according to claim 15, wherein the second acquisition module obtains the evidence information corresponding to the determination result, comprising:
determining, by the second acquisition module, contribution representation values of the risk feature information; and obtaining the evidence information corresponding to the determination result based on the contribution representation values and the risk feature information corresponding to the contribution representation values.

**17.** The apparatus according to claim 16, wherein the determining, by the second acquisition module, contribution representation values of the risk feature information comprises:

determining, by the second acquisition module, at least one of the following specific representation values of the risk feature information: an evidence importance representation value, a category determination contribution representation value, a feature dimension contribution representation value, or a feature anomaly representation value; and
determining the contribution representation values of the risk feature information based on determined specific representation values.

**18.** The apparatus according to claim 17, wherein the classifier performs classification by using a decision tree, and wherein at least some nodes on the decision tree comprise a risk feature corresponding to the risk feature information.

**19.** The apparatus according to claim 18, wherein the second acquisition module determines the category determination contribution representation value of the risk feature information of the current risk control event in the following method:
determining, by the second acquisition module, a decision path corresponding to the determination result on the decision tree; and determining the category determination contribution representation value of the risk feature information of the current risk control event based on density change information of sample risk control events of a specified category that are before and after a specific node comprised on the decision path, wherein the specific node comprises the risk feature corresponding to the risk feature information.

**20.** The apparatus according to claim 19, wherein the determining, by the second acquisition module, the category determination contribution representation value of the risk feature information of the current risk control event based on density change information of sample risk control events of a specified category that are before and after a specific node comprised on the decision path comprises:
setting, by the second acquisition module, a virtual sample risk control event; and determining the category determination contribution representation value of the risk feature information of the current risk control event based on density change information of sample risk control events and virtual sample risk control events of the specified category that are before and after the specific node comprised on the decision path.

**21.** The apparatus according to claim 20, wherein the setting, by the second acquisition module, a virtual sample risk control event comprises:
setting, by the second acquisition module, the virtual sample risk control event based on a prior probability distribution assumed for the sample risk control events of the specified category.

**22.** The apparatus according to claim 17, wherein the second acquisition module determines the feature dimension contribution representation value of the risk feature information of the current risk control event in the following method:

determining, by the second acquisition module, a plurality of sets that correspond to a risk feature corresponding to the risk feature information;
determining a set in the plurality of sets that comprises the risk feature information; and
determining the feature dimension contribution representation value of the risk feature information based on a density of sample risk control events, of a specified category, corresponding to the set that comprises the risk feature information, wherein any risk feature information corresponding to the risk feature belongs to at least one of the plurality of sets.

**23.** The apparatus according to claim 18, wherein the second acquisition module determines the feature anomaly representation value of the risk feature information of the current risk control event in the following method:

determining, by the second acquisition module, the feature anomaly representation value of the risk feature information of the current risk control event based on a status of determining sample risk control events of a specified category on a specific node comprised on the decision path, wherein the specific node comprises the risk feature corresponding to the risk feature information.

24. The apparatus according to claim 16, wherein the second acquisition module obtains the evidence information corresponding to the determination result, comprising:

ranking, by the second acquisition module, the risk feature information based on the determined contribution representation values of the risk feature information; and
obtaining, based on a ranking result, evidence information corresponding to risk feature information with top N contribution representation values, and using the evidence information as the evidence information corresponding to the determination result.

25. The apparatus according to claim 14, wherein before generating the case closing information of the current risk control event, the generation module calculates a confidence level of the determination result, and determines that the confidence level of the determination result is not less than a specified threshold.

26. The apparatus according to any one of claims 14 to 25, wherein the category of the current risk control event is a case or a non-case.

S101

Obtain each piece of risk feature information of a current risk control event

S102

Determine a category of the current risk control event based on the risk feature information

S103

Obtain evidence information corresponding to a determination result

S104

Generate case closing information of the current risk control event based on the determination result and the evidence information

FIG. 1

```
┌─────────────────────────────────────────────────────────────────────┐
│  Obtain each piece of risk feature information of a current risk      │
│  control event                                                        │
└─────────────────────────────────────────────────────────────────────┘
                                  │
                                  ▼
┌─────────────────────────────────────────────────────────────────────┐
│  Determine a category of the current risk control event based on the  │
│  risk feature information                                             │
└─────────────────────────────────────────────────────────────────────┘
                                  │
                                  ▼
┌─────────────────────────────────────────────────────────────────────┐
│  Determine contribution representation values of the risk feature     │
│  information                                                          │
└─────────────────────────────────────────────────────────────────────┘
                                  │
                                  ▼
┌─────────────────────────────────────────────────────────────────────┐
│  Rank the risk feature information based on the contribution           │
│  representation values                                               │
└─────────────────────────────────────────────────────────────────────┘
                                  │
                                  ▼
┌─────────────────────────────────────────────────────────────────────┐
│  Obtain, based on a ranking result, evidence information              │
│  corresponding to risk feature information with top N contribution     │
│  representation values, and use the evidence information as evidence   │
│  information corresponding to a determination result                  │
└─────────────────────────────────────────────────────────────────────┘
                                  │
                                  ▼
┌─────────────────────────────────────────────────────────────────────┐
│  Generate case closing information of the current risk control event   │
│  based on the determination result and the evidence information       │
└─────────────────────────────────────────────────────────────────────┘
```

FIG. 2

FIG. 3

FIG. 4

| | |
|---|---|
| Case closing information | [Self-determining: Environment: List: XX; Transaction: XX]<br>Payment on a trusted mobile phone; the same IP; the same mobile device<br>Purchase a skirt at 10: 48: 09 on June 18, 2015<br>Determine whether it is operated by an acquaintance or by the user himself or herself while being cheated to purchase; not stolen; closured as a non-case |

Manual processing in the
existing technology

| | |
|---|---|
| Task annotation: | TEL: 135****3833; female; transaction is not conducted by the customer herself; no link is clicked; used by neither a family member nor a friend; unaware of stealing; funds are expended from financial product A and the bank card; China Construction Bank card number: 622700*********1721; the bank card is registered in Ningde City, Fujian Province; status: normal; the customer's email address is: chenhui_*********@**.com; and the case is submitted for verification. |
| Model score: | xxxx |
| Case closing testimony: | Real-time score: 0.027; non-case<br>Testimony: Task No.: 163783935; confidence level: 0.973;<br>Top N determining bases ranked in descending order of weights are as follows: |
| | 1. Device credibility: 1.0; trusted device;<br>A total of 10 transactions that amount to 2461.6 yuan are conducted in 13 days (the last transaction is: an authentic watch xxxx from Saudi Arabia purchased from a buyer-on behalf)<br>Evidence weight: 0.653 |
| | 2. City credibility: 0.113<br>In Fuzhou, Fujian Province, a total of 2 transactions that amount to 1284.8 yuan are conducted in 6 days (the last transaction: an authentic watch xxxx from Saudi Arabia purchased from a buyer-on behalf)<br>Evidence weight: 0.124 |
| | 3. ... |

Automatic processing in the
solutions of the present application

## FIG. 5

601 602 603 604

| First acquisition module | Determining module | Second acquisition module | Generation module |

FIG. 6

# INTERNATIONAL SEARCH REPORT

| | |
|---|---|
| International application No. | |
| | PCT/CN2018/078164 |

**A. CLASSIFICATION OF SUBJECT MATTER**

G06F 19/00 (2018.01) i

According to International Patent Classification (IPC) or to both national classification and IPC

**B. FIELDS SEARCHED**

Minimum documentation searched (classification system followed by classification symbols)

G06F, G06Q, H04L

Documentation searched other than minimum documentation to the extent that such documents are included in the fields searched

Electronic data base consulted during the international search (name of data base and, where practicable, search terms used)

WPI; EPODOC; CNPAT; CNKI; IEEE: 电子商务, 网络交易, 业务, 风控, 风险, 报案, 案件, 申诉, 异常, 证据, 处理, 核实, 审核, 仲裁, 分类, 训练, 特征, 贡献, online, purchase, sale, business, risk, case, evidence, verify, SVM, characteristic, contribution

**C. DOCUMENTS CONSIDERED TO BE RELEVANT**

| Category* | Citation of document, with indication, where appropriate, of the relevant passages | Relevant to claim No. |
|---|---|---|
| X | CN 106033515 A (ALIBABA GROUP HOLDING LIMITED), 19 October 2016 (19.10.2016), description, pages 3-4 | 1, 12, 14, 25 |
| Y | CN 106033515 A (ALIBABA GROUP HOLDING LIMITED), 19 October 2016 (19.10.2016), description, pages 3-4 | 2, 13, 15, 26 |
| Y | CN 104091073 A (NATIONAL UNIVERSITY OF DEFENSE TECHNOLOGY), 08 October 2014 (08.10.2014), description, pages 4-5 | 2, 13, 15, 26 |
| A | CN 105991609 A (ALIBABA GROUP HOLDING LIMITED), 05 October 2016 (05.10.2016), entire document | 1-26 |
| A | US 2017039637 A1 (TELEFONICA DIGITAL ESPANA, S.L.U.), 09 February 2017 (09.02.2017), entire document | 1-26 |

☐ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 May 2018 | 30 May 2018 |

| Name and mailing address of the ISA | Authorized officer |
|---|---|
| State Intellectual Property Office of the P. R. China No. 6, Xitucheng Road, Jimenqiao Haidian District, Beijing 100088, China Facsimile No. (86-10) 62019451 | XIE, Xin Telephone No. 86-(10)-53961366 |

Form PCT/ISA/210 (second sheet) (January 2015)

## INTERNATIONAL SEARCH REPORT
### Information on patent family members

International application No.

PCT/CN2018/078164

| Patent Documents referred in the Report | Publication Date | Patent Family | Publication Date |
|---|---|---|---|
| CN 106033515 A | 19 October 2016 | None | |
| CN 104091073 A | 08 October 2014 | None | |
| CN 105991609 A | 05 October 2016 | None | |
| US 2017039637 A1 | 09 February 2017 | None | |

Form PCT/ISA/210 (patent family annex) (January 2015)